# EUROPÄISCHE PATENTSCHRIFT

(11) **EP 2 154 544 B1**
(45) Veröffentlichungstag und Bekanntmachung des Hinweises auf die Patenterteilung: **21.06.2017**
(21) Anmeldenummer: 09010025.6
(22) Anmeldetag: 04.08.2009
(51) Int. Cl.: G01S 19/08, G01S 19/20, G01S 19/42

(54) **Verfahren und Vorrichtung zum Optimieren der Genauigkeit der Positionsbestimmung und/oder zum Verringern des Integritätsrisikos eines Empfängers in einem globalen Satellitennavigationssystem**
Method and device for optimising the accuracy of the positioning and/or reduction of the integrity risk of a receiver in a global satellite navigation system
Procédé et dispositif d'optimisation de l'exactitude de la détermination d'une position et/ou de la réduction du risque d'intégrité d'un récepteur dans un système de navigation par satellite global

(30) Priorität: 11.08.2008 DE 102008037174
(43) Veröffentlichungstag der Anmeldung: 17.02.2010
(73) Patentinhaber: Airbus DS GmbH, 82024 Taufkirchen (DE)
(72) Erfinder: Daubrawa, Julian, 85521 Ottobrunn (DE); von Krüger, Jan M.W., Dr., 80807 München (DE)
(74) Vertreter: Frenkel, Matthias Alexander

(56) Entgegenhaltungen:
- WO-A2-2005/088332
- HERNÁNDEZ C ET AL: "GALILEO Integrity: The Ground Segment Computation Algorithm Perspective" ION GNSS. INTERNATIONAL TECHNICAL MEETING OF THE SATELLITEDIVISION OF THE INSTITUTE OF NAVIGATION, WASHINGTON, DC, US, Nr. 19TH, 26. September 2006 (2006-09-26), Seiten 2634-2645, XP002521139
- A. MOZO GARCIA ET AL.: "Galileo navigation and Integrity Algorithms" ION GNSS 18TH INTERNATIONAL TECHNICAL MEETING OF THE SATELLITE DIVISION, 16. September 2005 (2005-09-16), Seiten 1315-1326, XP002557094 U.S.A.
- OEHLER V ET AL: "Galileo System Design & Performance" PROCEEDINGS OF ION GNSS 2006, FORT WORTH, TEXAS, USA, 26. September 2006 (2006-09-26), Seiten 492-503, XP002505282
- OEHLER V ET AL: "User Integrity Risk Calculation at the Alert Limit without Fixed Allocations" ION GNSS. INTERNATIONAL TECHNICAL MEETING OF THE SATELLITEDIVISION OF THE INSTITUTE OF NAVIGATION, WASHINGTON, DC, US, 21. September 2004 (2004-09-21), Seiten 1645-1652, XP002375519

## Beschreibung

Die Erfindung betrifft ein Verfahren und eine Vorrichtung zum Optimieren der Genauigkeit der Positionsbestimmung und/oder zum Verringern des Integritätsrisikos eines Empfängers in einem globalen Satellitennavigationssystem mit einer Anzahl an Satelliten.

Ein globales Satellitennavigationssystem umfasst eine Mehrzahl an Satelliten. Die Satelliten teilen einem Empfänger über Funk ihre genaue Position und Uhrzeit mit. Zur Positionsbestimmung muss der Empfänger die Signale von mindestens vier unabhängigen Satelliten gleichzeitig empfangen. Werden in dem Empfänger die vier Empfangszeiten der Satellitensignale möglichst genau gemessen, so kann die aktuelle Position und Uhrzeit des Empfängers rechnerisch abgeleitet werden.

Da sich der jeweilige Standort eines Satelliten ständig ändert und mit ihm die Entfernung des Satelliten zur Erde, lassen sich diese Parameter von dem Empfänger nicht direkt bestimmen. Stattdessen kennt ein jeder Satellit seine momentane Position, welche über eine Bodenstation regelmäßig abgeglichen werden kann. Die Entfernung von einem Satelliten zu dem Empfänger erschließt sich aus der Signallaufzeit. Jeder der Satelliten strahlt fortwährend seine Navigationsdaten und ein Zeitsignal aus. Durch den Vergleich mit seiner eigenen Uhr weiß der Empfänger, wie lange das Signal zu ihm gebraucht hat. Die genaue Zeit kann hierbei aus den Zeitsignalen der Satelliten abgeleitet werden. Daher werden zur Positionsbestimmung nicht nur drei, sondern vier Satelliten benötigt, um die drei Raumkoordinaten (x, y, z) im verwendeten Koordinatensystem und die genaue Zeit zu ermitteln. Aus den Raumkoordinaten können dann die geographische Länge, geographische Breite und die Höhe über dem definierten Referenzellipsoid berechnet werden. Mit anderen Worten, der Empfänger berechnet aus den Navigationsdaten die Position des Satelliten, innerhalb der mitübermittelten bzw. spezifizierten Fehlergrenzen unter Anwendung eines Orbitmodells zu jedem Zeitpunkt innerhalb der Gültigkeitsdauer der Navigationsdaten.

Einer der wichtigsten Systemparameter eines globalen Satellitennavigationssystems (Global Navigation Satellite System, GNSS) ist dessen globale Verfügbarkeit, die von verschiedenen Faktoren abhängig ist. Die Signallaufzeit der von den Satelliten ausgesendeten Signale wird durch die Atmosphäre verändert. Dieser Einfluss lässt sich zum Teil dadurch korrigieren, dass der Empfänger Signale auswertet, die ein Satellit auf unterschiedlichen Frequenzen sendet. Prinzipiell nimmt die Genauigkeit der Positionsbestimmung zu, wenn der Empfänger Signale von mehr als vier Satelliten empfangen kann, was jedoch nicht immer möglich ist (sog. überbestimmte Ortung). In der Praxis lässt sich aufgrund dieser Einflüsse die globale Verfügbarkeit nicht immer auf 100 % halten.

Hernändez c et al:" GALILEO Integrity: The Ground Segment Computation Algorithm Perspective" beschreibt Integritätsalgorithmen als einen Schlüssel zur Entwicklung zukünftiger GNSS basierter Anwendungen bei denen Servicegarantie essentiell ist.

Es ist daher Aufgabe der vorliegenden Erfindung, in Nichtverfügbarkeitsfällen des globalen Satellitennavigationssystems eine integere Positionslösung mit einer bestimmten Wahrscheinlichkeit zu erlauben bzw. zu finden.

Die Erfindung wird durch ein Verfahren mit den Merkmalen des Patentanspruches 1 oder eine Vorrichtung mit den Merkmalen des Patentanspruches 9 gelöst. Vorteilhafte Ausgestaltungen ergeben sich jeweils aus den abhängigen Patentansprüchen.

Die Erfindung schafft ein Verfahren zum Optimieren der Genauigkeit der Positionsbestimmung und/oder zum Verringern des Integritätsrisikos eines Empfängers in einem globalen Satellitennavigationssystem mit einer Anzahl an Satelliten. In diesem Verfahren wird für zumindest einen für den Empfänger sichtbaren Satelliten ein Abweichungsfehler ermittelt, der von der geometrischen Ausrichtung des Satelliten relativ zu dem Empfänger und von zumindest einem Systemparameter abhängig ist. Der Abweichungsfehler wird durch eine Fehlerprojektion in ein Koordinatensystem des Empfängers aus einem weiteren Abweichungsfehler ermittelt. Als Abweichungsfehler wird ein erster oder ein zweiter Wert verwendet, welcher der kleinere von beiden ist. Hierbei wird der erste Wert für den zumindest einen Systemparameter mit einem jeweiligen vorgegebenen Parameterwert ermittelt. Der zweite Wert wird für den zumindest einen Systemparameter mit einem modifizierten Parameterwert ermittelt, der gegenüber dem vorgegebenen Parameterwert derart modifiziert ist, dass ein geringerer Fehler des modifizierten Parameterwerts des zumindest einen Systemparameters als wahr angenommen wird.

Der Abweichungsfehler stellt einen projizierten Fehler dar. Der weitere Abweichungsfehler, aus welchem der Abweichungsfehler ermittelt wird, stellt einen sog. Range-Fehler dar, welcher auch als User Equivalent Range Error (UERE) bezeichnet wird.

Das erfindungsgemäße Verfahren weist den Vorteil auf, dass die Optimierung der Genauigkeit der Positionsbestimmung und/oder die Verringerung des Integritätsrisikos des Empfängers in einem globalen Satellitennavigationssystem ohne zusätzlichen Aufwand hinsichtlich der notwendigen Systembestandteile erzielt werden kann. Der Performancegewinn kann allein durch rechnerische Weise realisiert werden. Hierbei ermöglicht es die Erfindung, dass ein Teil der unter üblichen Umständen nicht verfügbaren Zeitpunkte, ohne die Konservativität der Positionierung zu gefährden, als verfügbar aufgefunden werden kann. Die einzigen "Kosten" der Erfindung bestehen hierbei in einem zusätzlichen Rechenaufwand, den zweiten Wert des Abweichungsfehlers zu ermitteln. Diese Ermittlung bzw. Berechnung wird vorzugsweise in dem Empfänger durchgeführt.

Der Erfindung liegt die Überlegung zu Grunde, dass die über die Satelliten verbreiteten Navigationsdaten in ihrer Natur als Ober- oder Untergrenzen zur Fehlermodellierung verstanden werden. Dies erfolgt, um zu jedem Zeitpunkt eine Konservativität zu gewährleisten. Die Erfindung beruht nun darauf, dass sich durch eine weitergehende, d.h. immer konservativere, Verschlechterung des Fehlerbudgets (d.h. der Ober- bzw. Untergrenzen) des zumindest einen Systemparameters die in das Koordinatensystem des Empfängers projizierte Positionslösung in vielen Fällen verbessern lässt.

Als Systemparameter kann beispielsweise ein SISA-Wert berücksichtigt werden. SISA steht für Signal In Space Accuracy. Beispielsweise kann durch eine Vergrößerung des in dem Empfänger verwendeten SISA-Werts, welcher systemseitig in einer von einem jeweiligen Satelliten übertragenen Navigationsnachricht unter Umständen deutlich besser (also kleiner) ist, das Integritätsrisiko einer sog. Safety of Life (SoL)-Service-Positionslösung deutlich reduziert werden. Alternativ kann als Systemparameter auch ein SISMA-Wert berücksichtigt werden. Ferner kann bei dem vorgeschlagenen Verfahren als Systemparameter ein Integritätsparameter verwendet werden. Solche Integritätsparameter werden auch bekanntermaßen als "Thresholds" bezeichnet.

Es ist weiterhin zweckmäßig, wenn der zumindest eine Systemparameter von einem jeweiligen Satelliten an den Empfänger übertragen wird.

Die geometrische Ausrichtung des Satelliten relativ zu dem Empfänger umfasst insbesondere einen Elevationswinkel und/oder einen Azimutwinkel.

Das erfindungsgemäße Verfahren lässt sich dann besonders einfach und ohne zusätzliche Systembestandteile durchführen, wenn der Abweichungsfehler, d.h. der projizierte Fehler, durch den Empfänger ermittelt wird.

Gemäß einer weiteren zweckmäßigen Ausgestaltung wird ein jeweiliger Abweichungsfehler für einen Teil oder für alle für den Empfänger sichtbaren Satelliten ermittelt.

Die Erfindung schlägt ferner eine Vorrichtung zum Optimieren der Genauigkeit der Positionsbestimmung und/oder zum Verringern des Integritätsrisikos eines Empfängers in einem globalen Satellitennavigationssystem mit einer Anzahl an Satelliten vor, welche Mittel zur Durchführung des eben beschriebenen Verfahrens umfasst. Insbesondere ist diese Vorrichtung in dem Empfänger eines globalen Satellitennavigationssystems ausgebildet.

Die Erfindung wird nachfolgend näher anhand eines Ausführungsbeispiels in der Zeichnung beschrieben. Es zeigen:
- Fig. 1: eine schematische Darstellung eines globalen Satellitennavigationssystems zur Durchführung eines erfindungsgemäßen Verfahrens, und
- Fig. 2: zwei Diagramme, anhand denen die Ermittlung eines Abweichungsfehlers für einen für den Empfänger sichtbaren Satelliten schematisch erläutert wird.

Das Ausführungsbeispiel wird beispielhaft anhand von 4 Satelliten (RF1, RF2, RF3, RF4) beschrieben. Die Erfindung ist allerdings nicht auf den Fall von vier Satelliten beschränkt, sondern auf eine beliebige Anzahl von Satelliten anwendbar. Insbesondere ist die Anzahl der sichtbaren Satelliten für einen Empfänger ein Systemparameter, durch dessen Wahl einer Untermenge von Satelliten ein Performancegewinn erzielt werden kann.

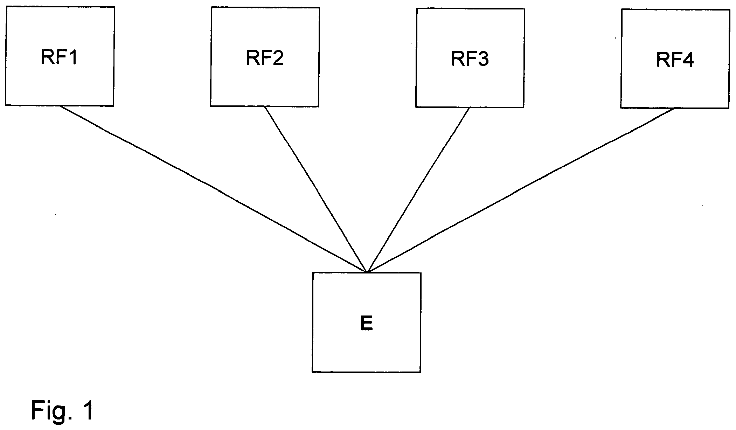

Fig. 1 zeigt in schematischer Darstellung ein globales Satellitennavigationssystem, mit einem Empfänger E, welcher im Ausführungsbeispiel von vier Satelliten RF1, RF2, RF3 und RF4 Navigationssignale empfängt. Es wird davon ausgegangen, dass für den Empfänger E nur die Satelliten RF1, RF2, RF3 und RF4 sichtbar sind. Darüber hinaus umfasst das globale Satellitennavigationssystem eine Anzahl an weiteren Satelliten, welche in der Fig. 1 nicht dargestellt und für den Empfänger E nicht sichtbar sind. Der Empfänger E ermittelt für jeden der sichtbaren Satelliten RF1, RF2, RF3 und RF4 aus dessen jeweiligem Navigationssignal einen Abweichungsfehler, welcher im Wesentlichen von der jeweiligen geometrischen Ausrichtung des Satelliten RF1, RF2, RF3, RF4 relativ zu dem Empfänger E und von zumindest einem Systemparameter, insbesondere einem von den jeweiligen Satelliten übertragenen SISA-Wert, abhängig ist.

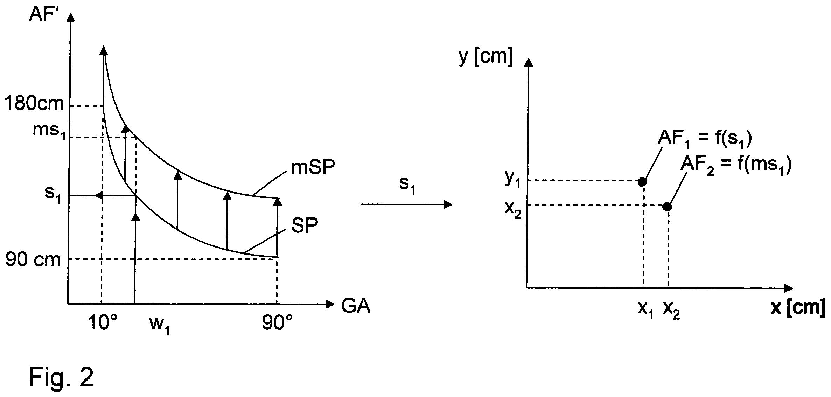

Der Empfänger E ist für jeden der Satelliten RF1, RF2, RF3 und RF4 in der Lage, einen Abweichungsfehler AF', d.h. einen sog. Range-Fehler, für dessen geometrische Ausrichtung GA relativ zu dem Empfänger E zu ermitteln. Hierzu sind in dem Empfänger E für jeden der Satelliten RF1, RF2, RF3, RF4 Daten (in Form einer Tabelle) oder Kurven hinterlegt, welche einen vorher ermittelten Zusammenhang zwischen der geometrischen Abweichung GA und dem Abweichungsfehler AF' wiedergeben. Dies ist beispielhaft für einen Satelliten in dem linken Diagramm der Fig. 2 dargestellt. Auf der x-Achse ist die geometrische Ausrichtung GA, insbesondere der Elevationswinkel, des betreffenden Satelliten relativ zu dem Empfänger E aufgetragen. Auf der y-Achse ist der Abweichungsfehler AF' in Zentimetern (allg. einem Längenmaß) aufgetragen. Der Kurvenverlauf ist in etwa exponentiell abnehmend, wobei dies lediglich exemplarisch gilt. In dieser Kurve sind hierbei ein oder mehrere Systemparameter, wie z.B. ein SISA-Wert, berücksichtigt, der oder die in Abhängigkeit des von dem Satelliten übertragenen Systemparameters herausgerechnet und an den oder die übertragenen Systemparameter angepasst werden kann.

Für einen von dem Satelliten übertragenen Systemparameter ist beispielsweise die in Fig. 2 dargestellte Kurve SP ermittelt worden, für die in diesem Ausführungsbeispiel gilt: Bei einem Elevationswinkel von 10° beträgt eine durch den Empfänger E zu berücksichtigende Abweichung ca. 180 cm. Bei einem Elevationswinkel von 90° beträgt der durch den Empfänger E zu berücksichtigende Abweichungsfehler AF' ca. 90 cm. Allgemein ist der Empfänger E in der Lage, bei einem ermittelten Elevationswinkel w₁ einen entsprechenden Parameterwert s₁ für den Abweichungsfehler AF' zu ermitteln. Hat der Empfänger E den Parameterwert s₁ für den Satelliten ermittelt, so kann aus diesem ein projizierter Fehler AF₁ ermittelt werden, wobei die Fehlerprojektion eine Transformation in ein x-y-Koordinatensystem des Empfängers E vornimmt. Dies ist in dem rechten Diagramm der Fig. 2 schematisch dargestellt und erfolgt durch den Empfänger E.

Beim Erhalt eines Navigationssignals von einem Satelliten erhält der Empfänger E von dem betreffenden Satelliten auch zumindest einen Systemparameter. Bei diesem kann es sich beispielsweise um einen SISA-Wert, einen SISMA-Wert oder einen anderen Integritätsparameter handeln. Im Rahmen der weiteren Beschreibung wird davon ausgegangen, dass zur Optimierung der Genauigkeit der Positionsbestimmung bzw. zum Verringern des Integritätsrisikos des Empfängers E ein SISA-Wert herangezogen wird. Beim Erhalt des SISA-Werts nimmt der Empfänger E - wie erläutert - eine vorübergehende Abänderung der für einen bestimmten SISA-Wert (nicht dargestellt) hinterlegten Normkurve vor. Hierbei wird der in der Normkurve enthaltene alte SISA-Wert herausgerechnet und der von dem Satelliten übertragene SISA-Wert berücksichtigt, so dass sich eine lineare Verschiebung der Normkurve ergibt (vgl. Kurve SP). Erst dann erfolgt die bereits beschriebene Umrechnung in das Nutzer-Koordinatensystem zur Ermittlung des tatsächlichen Abweichungsfehlers AF.

Erfindungsgemäß wird nun nicht nur der Abweichungsfehler AF₁ für den von dem Satelliten übermittelten SISA-Wert ermittelt. Vielmehr erfolgt daneben vor dem vorübergehenden Abändern der Normkurve eine konservativere Annahme des SISA-Wertes. Dies bedeutet, es wird ein größerer SISA-Wert verwendet, als dies für die an sich sichere Bestimmung der Genauigkeit der Position notwendig wäre. Hierdurch ergibt sich ebenfalls die bereits beschriebene lineare Verschiebung der Normkurve und relativ zu der Kurve SP nach oben. Diese Kurve ist in Fig. 2 mit mSP gekennzeichnet, was die Modifikation des Systemparameters charakterisieren soll. Anschließend erfolgt wiederum für den ermittelten Elevationswinkel w₁ die Ermittlung eines modifizierten Parameterwerts ms₁. Aus diesem wird ein Abweichungsfehler AF₂ ermittelt, der nun von dem modifizierten Parameterwert ms₁ abhängig ist. Als Abweichungsfehler AF wird dann derjenige Wert verwendet, welcher kleiner ist.

Diese zusätzliche Projektionsberechnung, welche die Ermittlung eines zweiten Werts für den Abweichungsfehler in dem Koordinatensystem des Empfängers umfasst, verbraucht wenig Rechenkapazität und kann eigenständig in dem Empfänger E erfolgen. Durch die Annahme eines größeren Fehlers des Systemparameters, was einer konservativeren Annahme entspricht, ergibt sich in vielen Fällen ein geringerer projizierter Fehler, welcher für den Empfänger E von Bedeutung ist. Diese konservative Annahme, welche einer Verschlechterung des Fehlerbudgets entspricht, ermöglicht eine Verbesserung der zur Positionierung des Empfängers beitragenden Signale in das Empfänger-Koordinatensystem. So kann beispielsweise durch die Vergrößerung des in dem Empfänger E verwendeten SISA-Wertes, der systemseitig in der Navigationsnachricht unter Umständen deutlich besser (also kleiner) übermittelt wird, das Integritätsrisiko bzw. die Genauigkeit der Positionsbestimmung verbessert werden bzw. reduziert werden. Ein Teil der herkömmlicherweise nicht verfügbaren Zeitpunkte kann auf diese Weise noch, ohne die Konservativität der Positionierung zu gefährden, als verfügbar aufgefunden werden. Dabei liegen die einzigen "Kosten" des Verfahrens, wie erwähnt, im Rechenaufwand beim Empfänger E.

Um die Genauigkeit der Positionsbestimmung und/oder die Verringerung des Integritätsrisikos eines Empfängers in einem globalen Satellitennavigationssystem zu optimieren, werden somit lediglich die in einem Empfänger für jeden Satelliten notwendigen Kurven, die den Range-Fehler in Abhängigkeit von der Elevation beschreiben, sowie weitere Systemparameter benötigt, welche in der Navigationsnachricht von dem bzw. den Satelliten an den Empfänger E übertragen werden. Die weiteren Systemparameter sind typischerweise nicht elevationsabhängig und führen daher zu einer linearen Verschiebung der Normkurve. Hierdurch ergibt sich in vielen Fällen ein verbesserter projizierter Abweichungsfehler.

## Patentansprüche

1. Verfahren zum Optimieren der Genauigkeit der Positionsbestimmung und/oder zum Verringern des Integritätsrisikos eines Empfängers (E) in einem globalen Satellitennavigationssystem mit einer Anzahl an Satelliten (RF1, RF2, RF3, RF4), **dadurch gekennzeichnet, dass**
- für zumindest einen für den Empfänger (E) sichtbaren Satelliten (RF1, RF2, RF3, RF4) ein Abweichungsfehler (AF₁, AF₂) ermittelt wird, der von der geometrischen Ausrichtung des Satelliten (RF1, RF2, RF3, RF4) relativ zu dem Empfänger (E) und von zumindest einem Systemparameter abhängig ist, bei dem als Systemparameter ein Integritätsparameter berücksichtigt wird,
- der Abweichungsfehler (AF₁, AF₂) durch eine Fehlerprojektion aus einem weiteren Abweichungsfehler (AF') ermittelt wird, wobei der weitere Abweichungsfehler (AF') für die geometrische Abweichung (GA) des Satelliten (RF1, ..., RF4) relativ zu dem Empfänger (E) aus einem zeitlich zuvor ermittelten und in dem Empfänger (E) hinterlegten Zusammenhang für den zumindest einen Systemparameter ermittelt wird, und wobei die Fehlerprojektion eine Transformation in ein x-y-Koordinatensystem des Empfängers (E) vornimmt, und
- ein erster und ein zweiter Wert (AF₁, AF₂) der Fehlerprojektion ermittelt werden, wobei
- der erste Wert (AF₁) für den zumindest einen Systemparameter (SP) aus einem ersten Parameterwert (s₁) des weiteren Abweichungsfehlers (AF') ermittelt wird, wobei der erste Parameterwert (s₁) in Abhängigkeit der geometrischen Abweichung (GA) aus dem hinterlegten Zusammenhang ermittelt wird,
- der zweite Wert (AF₂) für den zumindest einen Systemparameter mit einem zweiten modifizierten Parameterwert (ms₁) des weiteren Abweichungsfehlers (AF') ermittelt wird, der gegenüber dem vorgegebenen Parameterwert derart modifiziert ist, wobei der zweite modifizierte Parameterwert (ms₁) in Abhängigkeit der geometrischen Abweichung (GA) aus einem modifizierten Zusammenhang, der sich aus einer linearen Verschiebung des hinterlegten Zusammenhangs ergibt, ermittelt wird und gegenüber dem ersten Parameterwert konservativer angenommen ist, wobei die konservativere Annahme der Annahme eines größeren Fehlers des Systemparameters entspricht,
- als Abweichungsfehler (AF₁, AF₂) der kleinere der beiden Werte verwendet wird.

2. Verfahren nach Anspruch 1, bei dem als Systemparameter ein SISA-Wert (Signal In Space Accuracy) berücksichtigt wird.

3. Verfahren nach Anspruch 1 oder 2, bei dem als Systemparameter ein SISMA-Wert berücksichtigt wird.

4. Verfahren nach einem der vorherigen Ansprüche, bei dem der zumindest eine Systemparameter von dem jeweiligen Satelliten (RF1, RF2, RF3, RF4) an den Empfänger (E) übertragen wird.

5. Verfahren nach einem der vorherigen Ansprüche, bei dem die geometrische Ausrichtung des Satelliten (RF1, RF2, RF3, RF4) relativ zu dem Empfänger (E) einen Elevationswinkel und/oder einen Azimutwinkel umfasst.

6. Verfahren nach einem der vorherigen Ansprüche, bei dem der Abweichungsfehler (AF₁, AF₂) durch den Empfänger (E) ermittelt wird.

7. Verfahren nach einem der vorherigen Ansprüche, bei dem ein jeweiliger Abweichungsfehler (AF₁, AF₂) für einen Teil oder für alle für den Empfänger (E) sichtbaren Satelliten (RF1, RF2, RF3, RF4) ermittelt wird.

8. Vorrichtung zum Optimieren der Genauigkeit der Positionsbestimmung und/oder zum Verringern des Integritätsrisikos eines Empfängers (E) in einem globalen Satellitennavigationssystem mit einer Anzahl an Satelliten (RF1, RF2, RF3, RF4) mit Mittel zur Durchführung des Verfahrens nach einem der vorherigen Ansprüche.

9. Vorrichtung nach Anspruch 8, **dadurch gekennzeichnet, dass** diese in dem Empfänger ausgebildet ist.

## Claims

1. A method for optimizing the accuracy of position determination and / or reducing the integrity risk of a receiver (E) in a global satellite navigation system having a plurality of satellites (RF1, RF2, RF3, RF4), **characterized in that**
- for at least one satellite (RF1, RF2, RF3, RF4) that is visible to the receiver (E), a deviation error (AF₁, AF₂) is determined as a function of geometric orientation of the satellite (RF1, RF2, RF3, RF4) relative to the receiver (E) and of at least one system parameter, wherein an integrity parameter is considered as system parameter,
- the deviation error (AF₁, AF₂) is determined by an error projection on the basis of an additional deviation error (AF'), wherein the additional deviation error (AF') is determined for the geometric deviation (GA) of the satellite (RF1, ... , RF4) relative to the receiver (E), on the basis of a context for the at least one system parameter, the context being previously determined and stored in the receiver (E), and wherein the error projection performs a transformation into a x-y-coordinate system of the receiver (E), and
- a first and second value (AF₁, AF₂) of the error projection is determined, wherein
- the first value (AF₁) for the at least one system parameter (SP) is determined on the basis of a first parameter value (s₁) of the additional deviation error (AF'), wherein the first parameter value (s₁) is determined depending on the geometric deviation (GA) on the basis of the stored context,
- the second value (AF₂) for the at least one system parameter is determined using a modified parameter value (ms₁) of the additional deviation error (AF'), which is modified in comparison to the predetermined parameter value such that the second modified parameter value (ms₁) is determined depending on the geometric deviation (GA) from a modified context, which results from a linear displacement of the stored context, and the second modified parameter value is assumed more conservative in comparison to the first parameter value, wherein the more conservative assumption corresponds to a greater error of the system parameter,
- the smaller of both values is used as deviation error (AF₁, AF₂).

2. The method of claim 1, wherein a SISA value (Signal In Space Accuracy) is considered as system parameter.

3. The method of claim 1 or 2, wherein a SISMA value is considered as system parameter.

4. Method according to one of the preceding claims, wherein the at least one system parameter is transmitted from the respective satellite (RF1, RF2, RF3, RF4) to the receiver (E).

5. Method according to one of the preceding claims, wherein the geometric orientation of the satellite (RF1, RF2, RF3, RF4) relative to the receiver (E) includes an elevation angle and / or an azimuth angle.

6. Method according to one of the preceding claims, wherein the deviation error (AF₁, AF₂) is determined by the receiver (E).

7. Method according to one of the preceding claims, wherein a respective deviation error (AF₁, AF₂) is determined for a portion or for all of the satellites (RF1, RF2, RF3, RF4) that are visible to the receiver (E).

8. An apparatus for optimizing the accuracy of the position determination and / or for reducing the integrity risk of a receiver (E) in a global navigation satellite system with a plurality of satellites (RF1, RF2, RF3, RF4) with means for carrying out the method according to any one of the preceding claims.

9. Apparatus according to claim 8, **characterized in that** it is formed in the receiver.

## Revendications

1. Procédé d'optimisation de la précision dans la détermination d'une position et/ou de réduction du risque d'intégrité d'un récepteur (E) dans un système de navigation par satellite global comprenant plusieurs satellites (RF1, RF2, RF3, RF4), **caractérisé en ce que**
- une erreur d'écart (AF₁, AF₂), qui dépend de l'alignement géométrique du satellite (RF1, RF2, RF3, RF4) par rapport au récepteur et d'au moins un paramètre système dans le cadre duquel le paramètre système pris en compte consiste en un paramètre d'intégrité, est déterminée pour au moins un satellite (RF1, RF2, RF3, RF4) visible pour le récepteur (E),
- cette erreur d'écart (AF₁, AF₂) est déterminée par projection d'erreur à partir d'une autre erreur d'écart (AF), l'autre erreur d'écart (AF) pour l'écart géométrique (GA) du satellite (RF1, ..., RF4) par rapport au récepteur (E) étant déterminée pour ledit au moins un paramètre système à partir d'un contexte déterminé antérieurement et enregistré dans le récepteur (E), et la projection d'erreur opérant une transformation dans un système de coordonnées x et y du récepteur (E), et
- une première et une deuxième valeur (AF₁, AF₂) de la projection d'erreur étant ce faisant déterminées,
- la première valeur (AF₁) étant déterminée pour ledit au moins un paramètre système (SP) à partir d'une première valeur de paramètre (s₁) de l'autre erreur d'écart (AF), cette première valeur de paramètre (s₁) étant déterminée en fonction de l'écart géométrique (GA), à partir dudit contexte enregistré,
- la deuxième valeur (AF₂) étant déterminée pour ledit au moins un paramètre système à l'aide d'une deuxième valeur de paramètre (ms₁) modifiée de l'autre erreur d'écart (AF), laquelle valeur est modifiée par rapport à la valeur de paramètre prédéfinie, cette deuxième valeur de paramètre modifiée (ms₁) étant déterminée en fonction de l'écart géométrique (GA), à partir d'un contexte modifié résultant d'un déplacement linéaire du contexte enregistré, sur la base d'une hypothèse plus conservatrice par rapport à la première valeur de paramètre, l'hypothèse plus conservatrice consistant en l'hypothèse d'une plus grande erreur du paramètre système,
- la plus petite des deux valeurs étant utilisée comme erreur d'écart (AF₁, AF₂).

2. Procédé selon la revendication 1, dans le cadre duquel le paramètre système pris en compte consiste en une valeur SISA (Signal In Space Accuracy).

3. Procédé selon la revendication 1 ou 2, dans le cadre duquel le paramètre système pris en compte consiste en une valeur SISMA.

4. Procédé selon l'une des revendications précédentes, dans le cadre duquel ledit au moins un paramètre système est transmis au récepteur (E) par le satellite correspondant (RF1, RF2, RF3, RF4).

5. Procédé selon l'une des revendications précédentes, dans le cadre duquel l'alignement géométrique du satellite (RF1, RF2, RF3, RF4) par rapport au récepteur (E) comprend un angle d'élévation et/ou un angle d'azimut.

6. Procédé selon l'une des revendications précédentes, dans le cadre duquel l'erreur d'écart (AF₁, AF₂) est déterminée par le récepteur (E).

7. Procédé selon l'une des revendications précédentes, dans le cadre duquel une erreur d'écart (AF₁, AF₂) est déterminée pour une partie ou pour la totalité des satellites (RF1, RF2, RF3, RF4) visibles pour le récepteur (E).

8. Dispositif d'optimisation de la précision dans la détermination de la position et/ou de réduction du risque d'intégrité d'un récepteur (E) dans un système de navigation global comprenant plusieurs satellites (RF1, RF2, RF3, RF4), pourvu de moyens permettant l'exécution du procédé selon l'une des revendications précédentes.

9. Dispositif selon la revendication 8, **caractérisé en ce que** celui-ci est réalisé à l'intérieur du récepteur.
